# EUROPÄISCHE PATENTSCHRIFT

(11) **EP 3 774 179 B1**
(45) Veröffentlichungstag und Bekanntmachung des Hinweises auf die Patenterteilung: **26.03.2025**
(21) Anmeldenummer: 19719429.3
(22) Anmeldetag: 29.03.2019
(51) Int. Cl.: B24B 47/22

(54) **VERFAHREN ZUR KOMPENSATION VON POSITIONSFEHLERN IN EINEM FORMRANDUNGSPROZESS ODER IN EINEM FIXIERVORGANG EINES ROHKANTIGEN FERTIGEN BRILLENGLASES UND VORRICHTUNG HIERFÜR**
METHOD FOR COMPENSATING POSITIONING ERRORS IN AN EDGING PROCESS, OR IN A FASTENING OPERATION FOR A RAW-EDGED, FINISHED SPECTACLE LENS, AND DEVICE THEREFOR
PROCÉDÉ DE COMPENSATION D'ERREURS DE POSITION DANS UN PROCESSUS DE RÉALISATION DE REBORD DE FORME OU DANS UN PROCESSUS DE FIXATION D'UN VERRE DE LUNETTES À FINITION À BORDS BRUTS ET DISPOSITIF ASSOCIÉ

(30) Priorität: 29.03.2018 DE 102018204948
(43) Veröffentlichungstag der Anmeldung: 17.02.2021
(73) Patentinhaber: Rodenstock GmbH, 80687 München (DE)
(72) Erfinder: DUMM, Martin, 94259 Kirchberg (DE); GRAU, Markus, 85737 Ismaning (DE); KEIL, Andreas, 84453 Mühldorf (DE); MERKELBACH, Philipp, 82347 Bernried (DE); ÖGÜT, Ahmet, 94209 Regen (DE); RAHN, Karl, 94209 Regen (DE); REICK, Jasmine, 81549 München (DE); SZEGÖ, Peter, 85622 Feldkirchen (DE); URBAN, Arne, 81827 München (DE); WILD, Holger, 94571 Schaufling (DE)
(74) Vertreter: RCD-Patent Giesen, Schmelcher & Griebel Patentwanwälte PartG mbB
(86) Internationale Anmeldenummer: PCT/EP2019/058019
(87) Internationale Veröffentlichungsnummer: WO 2019/185871

(56) Entgegenhaltungen:
- EP-A1- 2 199 021
- WO-A1-01/70459
- DE-A1- 4 127 094

## Beschreibung

Die Erfindung betrifft Verfahren zur Kompensation von Positionsfehlern in einem Formrandungsprozess rohkantiger fertiger Brillengläser und eine Vorrichtung hierfür.

Aus dem Stand der Technik ist bekannt, für das Formranden rohkantiger fertiger Brillengläser, diese zu blocken oder zu spannen und mittels eines (Fräs- und/oder Schleif-)-Werkzeuges in die Fassungsform zu schleifen. Dieser Vorgang wird auch als Einschleifen, Formranden oder Randbearbeitung bezeichnet.

Für die Bearbeitung können die Brillengläser blocklos gespannt sein oder aber mittels eines oder mehrerer Blockstücke und/oder Klebpads fixiert werden. Zur Randbearbeitung werden Fräswerkzeuge oder Schleifwerkzeuge verwendet, mit denen die Gläser in die Fassungsform geschliffen oder gefräst werden. Zur Steuerung der Werkzeuge werden Zentrierdaten und Formdaten verwendet, welche Koordinaten und Formen für den Formrandungsprozess vorgeben.

Hierbei kann es z.B. aufgrund von Geometrieeffekten, wie beispielsweise einem Verkippen der Gläser während des Blockens oder Spannens, zu Abweichungen während des Schleifprozesses kommen.

Für besonders glatte Glasoberflächen ist dieses Verfahren jedoch nicht anwendbar, da die Gläser aus ihrer Halte- beziehungsweise Blockposition verrutschen können. Aufgrund der fehlerhaften Position der Gläser kann es in nachfolgenden Schritten, z.B. einem Formrandungsprozess, zur fehlerhaften Randbearbeitung der Gläser kommen.

Aus der internationalen Patentanmeldung WO 01 / 704 59 A1 ist ein Verfahren bekannt, bei dem vor dem Fixiervorgang eine Positionierung des Rohglases mittels eines Bildschirms abgebildet werden kann. Treten im Verlauf des Verfahrens jedoch Zentrierabweichungen auf, so können diese weder ermittelt noch ausgeglichen werden.

Aus der europäischen Patentanmeldung EP 2 199 021 A1 ist ein Flächenbearbeitungsverfahren für Brillengläser bekannt. Dabei wird ein Positionierfehler vor Beginn des Flächenbearbeitungsverfahrens bestimmt. Weder adressiert die Schrift die Probleme eines Formrandungsprozess noch Zentrierabweichungen, die nach einem Fixiervorgang auftreten können.

Aus der deutschen Patentanmeldung DE 41 27 094 A1 ist eine Brillenglas-Schleifmaschine bekannt, die gemäß vorgegebener Dezentrationswerte bearbeitet werden.

Der Erfindung liegt die Aufgabe zu Grunde, ein Verfahren bereitzustellen, welches dazu geeignet ist, Positionsfehler eines Glases zu berücksichtigen beziehungsweise zu kompensieren, sodass dieses auf die gewünschte Form formgerandet werden kann.

Die Lösung der Aufgabe erfolgt mittels eines Verfahrens gemäß dem Hauptanspruch und einer Vorrichtung gemäß einem nebengeordneten Anspruch.

Nachfolgend wird die Erfindung eingehender (unter Bezugnahme auf die Figuren) dargestellt werden.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordenbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar. Angaben mit Zahlenwerten sind in aller Regel nicht als exakte Werte zu verstehen, sondern beinhalten auch eine Toleranz von +/- 1% bis zu +/- 10 %.

Bezugnahme auf Standards oder Spezifikationen oder Normen sind als Bezugnahme auf Standards bzw. Spezifikationen bzw. Normen, die zum Zeitpunkt der Anmeldung und/oder - soweit eine Priorität beansprucht wird - zum Zeitpunkt der Prioritätsanmeldung gelten / galten zu verstehen. Hiermit ist jedoch kein genereller Ausschluss der Anwendbarkeit auf nachfolgende oder ersetzende Standards oder Spezifikationen oder Normen zu verstehen.

Benachbart schließt im nachfolgend explizit eine unmittelbare Nachbarschaftsbeziehung ein ohne jedoch hierauf beschränkt zu sein. Zwischen schließt im nachfolgenden explizit eine Lage ein, in der das zwischenliegende Teil eine unmittelbare Nachbarschaft zu den umgebenden Teilen aufweist.

Das Verfahren zur Kompensation von Positionsfehlern in einen Formrandungsprozesses eines rohkantigen fertigen Brillenglases, weist dabei beispielhaft auf einen Schritt des Ermittelns von Zentrierabweichungsparametern.. Dabei können die Zentrierabweichungsparameter indikativ für ein Bewegen des rohkantigen fertigen Brillenglases (während eines (mechanischen) Fixiervorganges) sein. Solche Bewegungen führen zu Positionsfehlern. Der (mechanische) Fixiervorgang kann unter Berücksichtigung der ermittelten Zentrierabweichungsparameter derart erfolgen, dass eine Bewegung des rohkantigen fertigen Brillenglases kompensiert wird. Am Ende des mechanischen Fixiervorganges kann das rohkantige fertige Brillenglas derart fixiert sein, dass während eines nachfolgenden (Einschleif-) Prozesses ein weiteres Bewegen des rohkantigen fertigen Brillenglases verhindert wird. Beispielsweise können in einem weiteren Schritt Steuerinformationen verändert werden. Die Änderung der Steuerinformationen kann unter Berücksichtigung der ermittelten Zentrierabweichungsparameter derart erfolgen, dass die Positionsfehler des rohkantigen fertigen Brillenglases kompensiert beziehungsweise berücksichtigt werden.

Dies hat den Vorteil, dass kostengünstig und schnell auch bei hochglatten Oberflächen ein korrektes Nachbearbeiten, z.B. Einschleifen / Formranden, der Gläser möglich ist.

Die Vorrichtung geeignet zum Fixieren und/oder zur Kompensation von Positionsfehlern eines rohkantigen fertigen Brillenglases, für einen Einschleifprozess / Formrandungsprozess des rohkantigen fertigen Brillenglases, weist beispielhaft auf: Ein Ermittlungsmittel, zum Ermitteln von (Zentrier-) Abweichungsparametern. Weiterhin kann die Vorrichtung ein Fixiermittel, zum Fixieren des rohkantigen fertigen Brillenglases, aufweisen, derart, dass während des nachfolgenden (Einschleif-) Prozesses ein weiteres Bewegen des rohkantigen fertigen Brillenglases verhindert werden kann. Weiterhin kann die Vorrichtung ein Steuermittel, zur Änderung der Steuerinformationen, basierend auf ermittelten (Zentrier-) Abweichungsparametern aufweisen, wobei die (Zentrier-) Abweichungsparameter indikativ sind, für das Auftreten von Positionsfehlern des rohkantigen fertigen Brillenglases während eines Fixiervorganges und während eines nachfolgenden Formrandungsprozesses. Ferner kann die Vorrichtung eine Fixiermechanik aufweisen, zum Einleiten eines mechanischen Fixiervorganges des rohkantigen fertigen Brillenglases mittels des Fixiermittels, basierend auf ermittelten Zentrierabweichungsparametern, wobei die Zentrierabweichungsparameter indikativ sind, für ein Bewegen des rohkantigen fertigen Brillenglases während des mechanischen Fixiervorganges, und der mechanische Fixiervorgang unter Berücksichtigung der ermittelten Zentrierabweichungsparameter erfolgt, um das Bewegen des rohkantigen fertigen Brillenglases zu kompensieren. Ferner kann die Vorrichtung eine Steuereinheit zur Übergabe der Steuerinformationen aufweisen, auf deren Basis ein Fixiervorgang und ein nachfolgender Formrandungsprozess ausgeführt werden kann, derart, dass Positionsfehler des rohkantigen fertigen Brillenglases kompensiert beziehungsweise berücksichtigt werden.

Dies hat den Vorteil, dass kostengünstig und schnell auch bei hochglatten Oberflächen ein korrektes Einschleifen / Formranden der Gläser möglich ist.

Gemäß einer ersten beispielhaften Ausgestaltung weist das Verfahren ferner auf, dass das Bewegen des rohkantigen fertigen Brillenglases während des mechanischen Fixiervorganges durch den mechanischen Fixiervorgang bedingt ist, insbesondere zum Ende des mechanischen Fixiervorganges.

Diese Ausgestaltung hat den Vorteil, dass weniger Berechnungsaufwand nötig werden kann, da der Umstand ausgenutzt wird, dass erst beim oder kurz vor dem physischen Berühren des Brillenglases durch den Chuck die Bewegung des Glases einsetzt.

Gemäß einer ersten beispielhaften Ausgestaltung weist das Verfahren ferner auf, dass das Auftreten der Positionsfehler des rohkantigen fertigen Brillenglases durch den Fixiervorgang und/oder den nachfolgenden Formrandungsprozess bedingt ist.

Diese Ausgestaltung hat den Vorteil, dass weniger Ermittlungsaufwand nötig werden kann und die auftretenden Positionsfehler vollständig kompensiert beziehungsweise berücksichtigt werden können, da der Umstand ausgenutzt wird, dass nur beim physischen Kontakt des Brillenglases mit dem Chuck und/oder mit dem Formbearbeitungswerkzeug Positionsfehler des Glases auftreten.

Gemäß einer weiteren beispielhaften Ausgestaltung weist das Verfahren ferner auf, dass das Bewegen des rohkantigen fertigen Brillenglases während des mechanischen Fixiervorganges ein Verschieben und/oder Verdrehen des rohkantigen fertigen Brillenglases aufweist.

Diese Ausgestaltung hat den Vorteil, dass weniger Berechnungsaufwand nötig werden kann, da der Umstand ausgenutzt wird, dass das Glas auf dem Teller aufliegt und somit weniger Freiheitsgrade der Bewegung des Glases vorhanden sind.

Gemäß einer weiteren beispielhaften Ausgestaltung weist das Verfahren ferner auf, dass das Auftreten der Positionsfehler des rohkantigen fertigen Brillenglases ein Verschieben und/oder Verdrehen während des Fixiervorgangs und/oder während des nachfolgenden Formrandungsprozesses des rohkantigen fertigen Brillenglases aufweist.

Diese Ausgestaltung hat den Vorteil, dass weniger Ermittlungsaufwand nötig werden kann, da der Umstand ausgenutzt wird, dass die entsprechenden (Zentrier-) Abweichungen einfach zu bestimmen sind.

Gemäß einer weiteren beispielhaften Ausgestaltung weist das Verfahren ferner auf, dass das Kompensieren des Bewegens des rohkantigen fertigen Brillenglases während des mechanischen Fixiervorganges ein örtliches Verändern eines vordefinierten Fixierpunktes am rohkantigen fertigen Brillenglas am Ende des mechanischen Fixiervorganges aufweist.

Diese Ausgestaltung weist den Vorteil auf, dass durch das Ermitteln eines neuen Haltepunktes des Glases, also einen Fixierpunkt des Glases nach der Glasbewegung, der örtlich dem ursprünglichen Fixierpunkt auf dem Glas entspricht, die bisherigen Zentrierdaten weiterhin verwendet werden können, wodurch Berechnungsaufwand weiter minimiert werden kann.

Gemäß einer weiteren beispielhaften Ausgestaltung weist das Verfahren ferner auf, dass das Ermitteln von Zentrierabweichungsparametern ein Einlesen vorbestimmter Zentrierabweichungsparameter aufweist.

Diese Ausgestaltung weist den Vorteil auf, dass das Ermitteln von Zentrierabweichungsparametern mit geringem Aufwand ausgeführt werden kann.

Gemäß einer weiteren beispielhaften Ausgestaltung weist das Verfahren ferner auf, dass das Kompensieren des Bewegens des rohkantigen fertigen Brillenglases während des mechanischen Fixiervorganges ein örtliches Verändern eines vordefinierten Fixierpunktes am rohkantigen fertigen Brillenglas zu Beginn des mechanischen Fixiervorganges aufweist, derart, dass der vordefinierte Fixierpunkt derart verändert wird, dass das rohkantige fertige Brillenglas an einem alternativen Fixierpunkt fixiert wird, an dem das Bewegen des rohkantigen fertigen Brillenglases während des mechanischen Fixiervorganges minimiert wird.

Diese Ausgestaltung weist den Vorteil auf, dass die bisherigen Zentrierdaten weiterhin verwendet werden können, wodurch Berechnungsaufwand weiter minimiert werden kann.

Gemäß einer weiteren beispielhaften Ausgestaltung weist das Verfahren ferner auf, dass die Änderung der Steuerinformationen ein örtliches Verändern eines vordefinierten Fixierpunktes am rohkantigen fertigen Brillenglas aufweist, derart, dass der vordefinierte Fixierpunkt derart verändert wird, dass das rohkantige fertige Brillenglas an einem alternativen Fixierpunkt fixiert wird, an dem das Auftreten von Positionsfehlern des rohkantigen fertigen Brillenglases während des Fixiervorganges und/oder des nachfolgenden Formrandungsprozesses minimiert wird.

Diese Ausgestaltung weist den Vorteil auf, dass die für den nachfolgenden Formrandungsprozess ursprünglichen Zentrier- und/oder Formdaten weiterhin verwendet werden können, wodurch Ermittlungsaufwand minimiert werden kann.

Gemäß einer weiteren beispielhaften Ausgestaltung weist das Verfahren ferner auf, dass das Ermitteln von Zentrierabweichungsparametern ein Einlesen vorbestimmter Zentrierabweichungsparameter aufweist.

Diese Ausgestaltung weist den Vorteil auf, dass das Fixierverfahren besonders schnell ausgeführt werden kann und mit geringem Rechenaufwand während des Fixiervorganges.

Gemäß einer weiteren beispielhaften Ausgestaltung weist das Verfahren ferner auf, dass das Ermitteln von Zentrierabweichungsparametern ein Einlesen und/oder Bestimmen entsprechend modifizierter Zentrierdaten für den nachfolgenden Einschleifprozess aufweist.

Diese Ausgestaltung weist den Vorteil auf, dass die Zentrierdaten neu ermittelt werden und somit eine erhöhte Flexibilität bei beispielsweise nicht vollständig nachzuvollziehenden Bewegungen erzielt werden kann, um weiterhin akurat einschleifen zu können.

Gemäß einer weiteren beispielhaften Ausgestaltung weist das Verfahren ferner auf, dass das Ermitteln von Zentrierabweichungsparametern basierend auf einer taktilen Bestimmung der Positionsfehler des rohkantigen fertigen Brillenglases während des Fixiervorganges und/oder während des nachfolgenden Formrandungsprozess erfolgt.

Diese Ausgestaltung weist den Vorteil auf, dass die auftretenden Positionsfehler während des Fixiervorganges und/oder während des nachfolgenden Formrandungsprozesses individuell und präzise kompensiert beziehungsweise berücksichtigt werden können.

Gemäß einer weiteren beispielhaften Ausgestaltung weist das Verfahren ferner auf, dass das Ermitteln von Zentrierabweichungsparametern basierend auf einem taktilen Messen der Bewegung des rohkantigen fertigen Brillenglases während des mechanischen Fixiervorganges erfolgt.

Diese Ausgestaltung weist den Vorteil auf, dass die Bewegung während des Fixiervorganges individuell und präzise vorgenommen werden kann.

Gemäß einer weiteren beispielhaften Ausgestaltung weist das Verfahren ferner auf, dass das Ermitteln von Zentrierabweichungsparametern basierend auf der Bestimmung von Positionsfehlern mittels Positionsbestimmung mindestens einer Gravur auf dem rohkantigen fertigen Brillenglas während des Fixiervorganges und/oder während des nachfolgenden Formrandungsprozess erfolgt.

Diese Ausgestaltung weist den Vorteil auf, dass die auftretenden Positionsfehler während des Fixiervorganges und/oder während des nachfolgenden Formrandungsprozesses individuell und präzise kompensiert beziehungsweise berücksichtigt werden können.

Gemäß einer weiteren beispielhaften Ausgestaltung weist das Verfahren ferner auf, dass das Ermitteln von Zentrierabweichungsparametern basierend auf einem Messen der Bewegung mindestens einer Gravur auf dem rohkantigen fertigen Brillenglas während des mechanischen Fixiervorganges erfolgt.

Diese Ausgestaltung weist den Vorteil auf, dass die Bewegung während des Fixiervorganges individuell und präzise vorgenommen werden kann.

Gemäß einer weiteren beispielhaften Ausgestaltung weist das Verfahren ferner auf, dass die Änderung der Steuerinformationen eine zusätzliche Fixierung des rohkantigen fertigen Brillenglases derart umfasst, dass das Auftreten von Positionsfehlern während des ursprünglichen Fixiervorganges und/oder des nachfolgenden Formrandungsprozesses minimiert oder gar verhindert wird.

Diese Ausgestaltung weist den Vorteil auf, dass Positionsfehler während des Fixiervorganges und/oder während des nachfolgenden Formrandungsprozesses verhindert werden können, wodurch die Gläser noch präziser formgerandet werden können.

Die rohkantigen fertigen Brillengläser können dabei herkömmlich beschichtet werden. Bei manchen sogenannten TopCoats, entsteht dabei eine äußerst glatte Oberfläche. Beispielsweise kann ein SuperTopCoat mit einer definierten Schichtdicke 9nm betragen. Dieser führt zu einer reproduzierbaren und besonders glatten Oberfläche. Wird ein solches Glas nun mittels eines herkömmlich kommerziell verfügbaren blocklosen Einschleifautomaten gespannt, also fixiert, kann es aufgrund der glatten Glasoberfläche zu einer Verschiebung des Glases aus der Halteposition kommen. Um das Glas zu halten / spannen, wird dieses in dem Einschleifautomaten in einer definierten Orientierung horizontal ausgerichtet auf einem Teller abgelegt. Mittels eines Vakuumsaugers wird das Glas von der oberen Seite angesaugt und vom Teller hochgehoben. Zur mechanischen Fixierung fährt ein sogenannter Chuck von der Glasunterseite heran, so dass das Glas an der Halteposition in vertikaler Richtung zusammengepresst wird und idealerweise somit fixiert wird. Aufgrund der vorliegenden optischen Wirkung des Glases und/oder aufgrund von Wechselwirkung der optischen Wirkung mit einer vorhandenen Dezentration, und allgemein aufgrund der Glaskrümmung, liegt im Haltepunkt ein Keil, ein geometrisches Prisma, vor. Durch die (orthogonal) auf den Keil ausgeübte Kraft während des Zusammenpressens, kann das Glas, insbesondere ein Glas mit (äußerst) glatter Oberfläche, dabei (beispielsweise in horizontaler Ebene) aus der Halteposition gedrückt werden. Die auf den Keil ausgeübte Kraft während des Zusammenpressens kann orthogonal, im Wesentlichen orthogonal oder nicht orthogonal mit Bezug auf die Seitenflächen des Keils sein. Die daraus resultierende Kraft kann das Glas aus der Halteposition drücken. Die Richtung, in die das Glas gedrückt wird, kann beispielsweise in horizontaler Ebene liegen, ist aber nicht darauf eingeschränkt. Die Ausprägung dieser Verschiebung ist dabei abhängig von der Stärke des im Haltepunkt vorliegenden Prismas und kann weiterhin von der Art des Glases, beispielsweise plus- oder minus-Wirkung im Glas, und dem Anpressdruck, der Materialbeschaffenheit der Gläser - wie beispielweise der mechanischen Härte - von dem Brechungsindex der Gläser, von der Oberflächenbeschaffenheit der Gläser und/oder den Beschaffenheiten der Glasaufnahme des Einschleifautomaten abhängen.

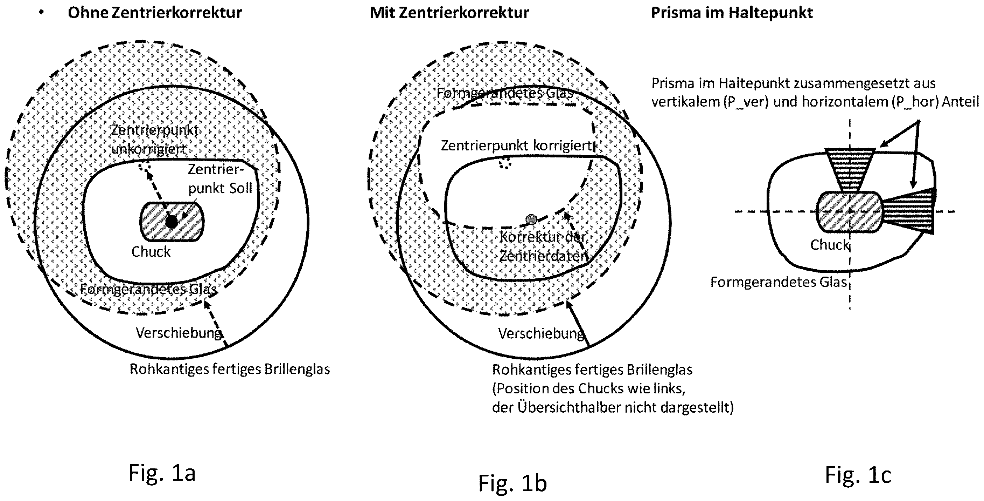

Das im Haltepunkt vorliegende Prisma lässt sich komponentenweise beispielsweise mit P_hor und P_ver beschreiben, als Stärke des Prismas in x-Richtung beziehungsweise in y-Richtung, siehe Figur 1c. Die beim Einschleifprozess / Formrandungsprozess auftretenden Abweichungen von den Soll-Zentrierdaten in x-Richtung und y-Richtung und gegebenenfalls einer Achslage, welche zusammenfassend auch als Zentrierabweichungen bezeichnet werden, lassen sich ebenfalls getrennt beschreiben und messen. Um nun die auftretenden Zentrierabweichungen zu kompensieren kann beispielsweise im ersten Schritt das Prisma im Haltepunkt berechnet werden. Dies kann mittels eines Berechnungstools erfolgen. Dabei kann die Ausdehnung des Chucks berücksichtigt werden, also die Kontaktfläche des Chucks im Haltepunkt des Glases über dessen Ausdehnung das Prisma berechnet wird. In nächsten Schritt können die beim Einschleifprozess / Formrandungsprozess auftretenden Zentrierabweichung, z.B. einer Verschiebungen und/oder einer Verdrehungen, für verschiedene (beliebige) Prismen systematisch bestimmt (z.B. berechnet) werden. Dies kann dadurch erfolgen, dass rohkantige fertige Brillengläser mit geeigneten optischen Wirkungen formgerandet werden und geeignete Rückschlüsse aus der Messung der Zentrierabweichungen gezogen werden. Damit können nunmehr die beim Fixieren Fixieren und/oder die beim nachfolgenden Formrandungsprozess auftretenden Positionsfehler des Glases, wie z.B. eine unerwünschte Bewegungen des Glases (im Haltepunkt), also Verschiebungen und/oder Verdrehungen, bestimmt werden. Die Zentrierabweichungen sind bei geeigneten Prozessparametern der Einschleifautomaten abhängig von P_hor und P_ver. Daher kann die Halteposition bei ausreichend genauer Kenntnis dieses Zusammenhangs in Bezug auf die Steuerinformationen angepasst/verändert werden, so dass die zu erwartenden Positionsfehler (hervorgerufen z.B. durch Bewegung) beim Fixieren und/oder bei dem nachfolgenden Formrandungsprozess entsprechend kompensiert beziehungsweise berücksichtigt werden kann. Auch können die tatsächlichen Positionsfehler - also die tatsächlich auftretende Bewegung des Glases - mit geeigneten Methoden bestimmt werden, so dass die Steuerinformationen für das individuelle Glas verändert werden können, wodurch die Genauigkeit der Kompensation beziehungsweise der Berücksichtigung der Positionsfehler verbessert werden kann. Bei den Steuerinformationen kann es sich beispielsweise um Zentrierdaten und/oder Formdaten handeln, die für den Formrandungsprozess an eine Einschleifmaschine übergeben werden und welche beispielsweise die Zentrierung und/oder Form der Randbearbeitung beschreiben. Weiter kann es sich bei den Steuerinformationen beispielsweise um die Halteposition handeln, in der das Glas fixiert wird. Wie zuvor beschrieben kann somit durch die Anpassung der Steuerinformationen eine Fehlstellung des Glases während des Fixiervorgangs und/oder während des Formrandungsvorgangs geeignet kompensiert beziehungsweise berücksichtigt werden. Mit diesem Verfahren kann auch ein mögliches Verkippen der Gläser kompensiert werden. Somit kann eine kompensierende Verschiebung und/oder Verdrehung der Halteposition erfolgen, entsprechend der tatsächlich auftretenden Bewegung des Glases während des Fixiervorganges.

Mit diesem Verfahren ist es auch möglich ein Verkippen eines Glases zu kompensieren.

Da das Prisma im Haltepunkt für beliebige Flächengeometrien berechnet werden kann, ist dieses Verfahren dementsprechend auch für beliebige Flächengeometrien der Gläser anwendbar.

Dadurch kann die Ausschussquote bezüglich Einschleiffehlern, wie beispielsweise Zentrierabweichungen außerhalb einer zulässigen Toleranz - beispielsweise Abweichung der Zentrierdaten in x-Richtung und/oder y-Richtung und/oder Verdrehung der Achslage, letztere auch bekannt als Achsdreher, verbessert werden, wodurch Kosten eingespart werden können und Lieferzeiten verkürzt werden können.

Das Kompensieren bzw. Berücksichtigen von Positionsfehlern, z.B. der Bewegung, des Glases während des Fixiervorganges kann auch dadurch erfolgen, dass ein alternativer Haltepunkt ermittelt wird, in welchem das Prisma klein genug ist, um die Glasbewegung zu minimieren oder gar zu verhindern. Es können dann für den Formrandungsprozess unveränderte Steuerinformationen verwendet werden.

Das Kompensieren beziehungsweise das Berücksichtigen der Positionsfehler des Glases während des Fixiervorgangs kann auch dadurch erfolgen, dass ein alternativer Haltepunkt ermittelt wird, der so gewählt ist, dass die Gläser in die ursprünglich zu verwendende Halteposition rutschen beziehungsweise gedrückt werden. Es können dann für den Formrandungsprozess unveränderte Steuerinformationen verwendet werden.

Ferner ist es möglich eine taktile Messung anzuwenden, um die Positionsfehler, z.B. die Bewegung, des Glases während des Fixiervorganges und/oder des nachfolgenden Formrandungsprozesses zu beobachten / messen und beispielsweise die Steuerdaten (oder die Zentrierdaten) entsprechend dieser Bewegung / Positionsfehler anzupassen, so dass das Glas weiterhin korrekt bzw. präiser eingeschliffen / formgerandet werden kann.

Auch kann die Bestimmung der Positionsfehler (z.B. die Bewegung) mittels optischer Messung erfolgen, beispielsweise mittels eines Scheitel-Brechwert-Messers oder mittels einer Funktionsgravur, die auf dem Glas aufgebracht ist.

Das Kompensieren beziehungsweise das Berücksichtigen der Positionsfehler des Glases während des Fixiervorgangs kann auch dadurch erfolgen, dass eine temporäre zusätzliche Fixierung - beispielsweise mechanischer Art - das Auftreten von Positionsfehler während des Fixiervorgangs und/oder während des nachfolgenden Formrandungsprozesses minimiert oder gar verhindert. Es können dann für den Formrandungsprozess unveränderte Steuerinformationen verwendet werden.

In den Figuren 1a-1c sind schematische Darstellungen in Bezug auf die Zentrierkorrektur ersichtlich. Dabei ist in Figur 1a und 1b ein rohkantiges fertiges Brillenglas als kreisförmiger Umriss (durchgezogene Linie) dargestellt. Das gewünschte formgerandete Glass ist bezüglich seines Umrisses als entsprechender weiß dargestellter Ausschnitt angegeben. Kommt es nun zu einer Positionsänderung, dargestellt als Verschiebung von Zentrierpunkt soll nach Zentrierpunkt unkorrigiert, so verschiebt sich das rohkantige fertige Brillenglas in eine unzentrierte Position, dargestellt als gestrichelter gefüllter kreisförmiger Umriss. D.h. würde nunmehr der Formrandungsprozess ausgeführt, würde das formgerandete Glas bei einer dargestellt gr0ßen Abweichung unbrauchbar werden. Um den entgegenzuwirken, wird wie in Figur 1b dargestellt der Zentrierpunkt bzw. die Zentrierdaten korrigiert, sodass trotz Positionsänderung das rohkantige fertige Brillenglas korrekt formgerandet werden kann.

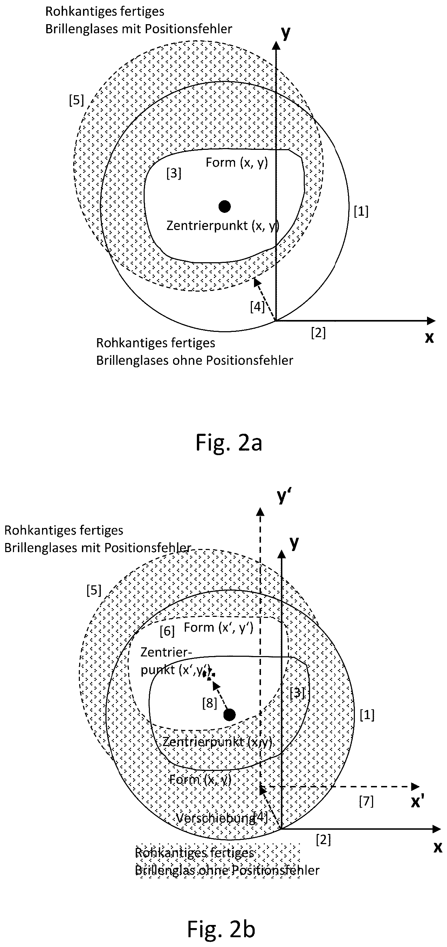

Aus den Figuren 2a und 2b kann die Änderung der Steuerinformation ersehen werden.

In Figur 2a ist zunächst eine unveränderte Steuerinformationen für einen Formrandungsprozess eines rohkantigen fertigen Brillenglases ohne Berücksichtigung des Positionsfehlers dargestellt. Dabei ist das rohkantige fertige Brillenglas 1 und im gleichen Bezugssystem 2 die Steuerinformationen 3 (in diesem Beispiel Zentrierpunkt und Form für den Formrandungsprozess) bezeichnet.

Aufgrund von Positionsfehlern während des Fixiervorgangs des rohkantigen fertigen Brillenglases und/oder während eines nachfolgenden Formrandungsprozesses des rohkantigen fertigen Brillenglases kann es zu einer Verschiebung 4 des Brillenglases gegenüber der Soll-Position kommen, hier dargestellt durch das rohkantige fertige Brillenglas mit Positionsfehler 5. Ohne Ermittlung der Zentrierabweichungsparameter und Änderung der Steuerinformationen beziehen sich die Steuerinformationen weiterhin auf das Bezugssystem 2 des unverschobenen Brillenglases 1, wodurch der Positionsfehler nicht kompensiert wird.

In diesem Beispiel würden beim Formranden die ursprünglichen Steuerinformationen 3 (d.h. Zentrierpunkt und Form bezogen auf das ursprüngliche Bezugssystem 2) verwendet werden, wodurch es zu einem fehlerhaften Einschleifergebnis Form 3 aus Positionsfehler 5 (fehlerhafte Position von Zentrierpunkt und Form auf dem Glas) für das verschobene Glas kommt.

In Figur 2b ist die veränderte Steuerinformationen für einen Formrandungsprozess eines rohkantigen fertigen Brillenglases mit Berücksichtigung des Positionsfehlers dargestellt. Dabei ist wiederum das rohkantige fertige Brillenglas 1 und im gleichen (x,y)-Bezugssystem 2 die Steuerinformationen 3 (in diesem Beispiel Zentrierpunkt(x,y) und Form(x,y) für den Formrandungsprozess) bezeichnet.

Aufgrund von Positionsfehlern während des Fixiervorgangs des rohkantigen fertigen Brillenglases und/oder während eines nachfolgenden Formrandungsprozesses des rohkantigen fertigen Brillenglases kann es zu einer Verschiebung 4 des Brillenglases gegenüber der Soll-Position kommen, hier dargestellt durch das rohkantigen fertigen Brillenglas mit Positionsfehler 5.

Wie zuvor beschrieben, können nun durch Ermittlung der Zentrierabweichungsparameter die Steuerinformationen geändert werden, so dass die Positionsfehler des rohkantigen fertigen Brillenglases kompensiert beziehungsweise berücksichtigt werden können.

In diesem Beispiel handelt es sich bei den Zentrierabweichungsparametern 8 um die Verschiebung 4 des rohkantigen fertigen Brillenglases im (x,y)-Bezugssystem. Die Änderung der Steuerinformation umfasst in diesem Beispiel eine Translation 8 des Zentrierpunktes (x → x', y → y') und entsprechend eine Translation der Form (x → x', y → y'). Die geänderten Steuerinformationen 6 sind gegenüber dem ursprünglichen (x,y)-Bezugssystem 2 verschoben, beziehungsweise im verschobenen (x',y')-Bezugssystem 7 ortsfest.

In diesem Beispiel würde durch Verwendung der geänderten Steuerinformationen für den Formrandungsprozess die Verschiebung kompensiert werden, wodurch es zu einem korrekten Einschleifergebnis Form 6 trotz Postionsfehlers 5 (korrekte Position von Zentrierpunkt und Form auf dem Glas) für das verschobene Glas kommt.

In diesem Beispiel würde durch Verwendung der geänderten Steuerinformationen für den Formrandungsprozess die Verschiebung kompensiert werden, wodurch es zu einem korrekten Einschleifergebnis Form 6 trotz Postionsfehlers 5 (korrekte Position von Zentrierpunkt und Form auf dem Glas) für das verschobene Glas kommt.

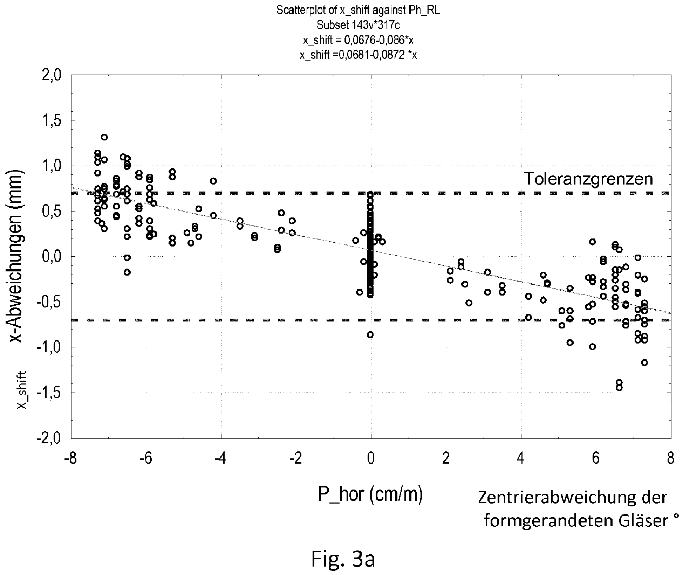

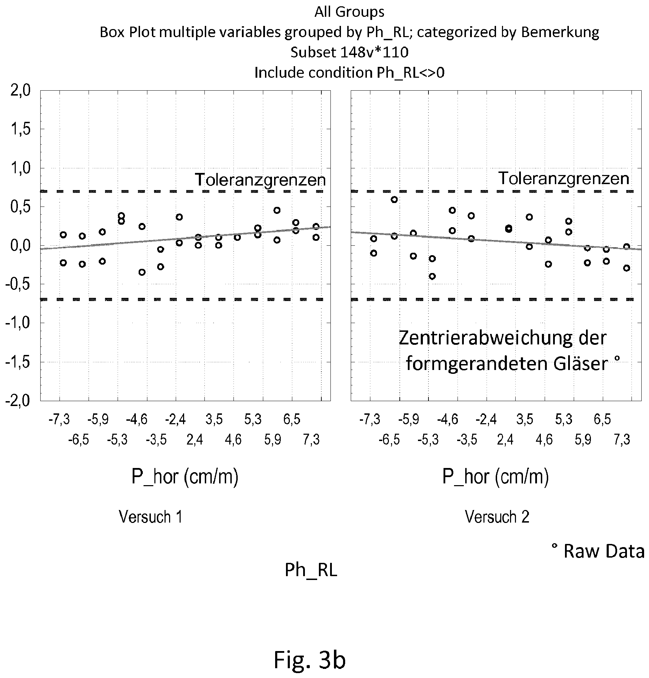

In Figur 3A sind Messergebnise in Bezug auf eine horizontale Zentrierabweichungen ohne der Positionsfehler und Figur 3B Bezug auf eine horizontale Zentrierabweichungen mit Berücksichtigung dargestellt. Dabei sind die Zentrierabweichungen für rohkantige fertige Brillengläser nach dem Formrandungsprozess in Abhängigkeit des Prismas im Haltepunkt dargestellt. Gläser, deren Zentrierabweichungen außerhalb der Toleranzgrenzen liegen, gelten aus Ausschuss. In Figur 3A wurden die Positionsfehler nicht berücksichtigt, wie zu Fig. 2a beschrieben. In Figur 3B wurden die Positionsfehler berücksichtigt, wie zu Fig. 2b beschrieben. Die Ausschussquote fällt mit Berücksichtigung der Positionsfehler deutlich niedriger aus (hier konkret insgesamt 0% für x-Abweichungen über beide Versuche).

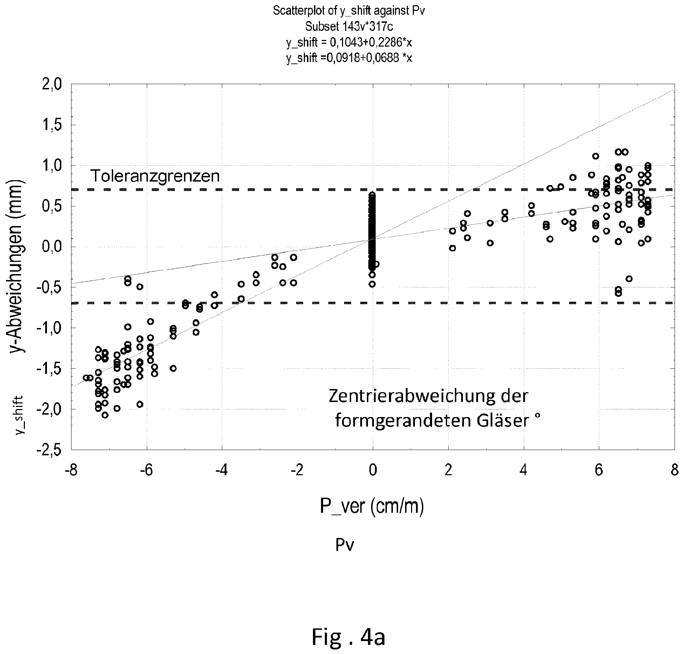

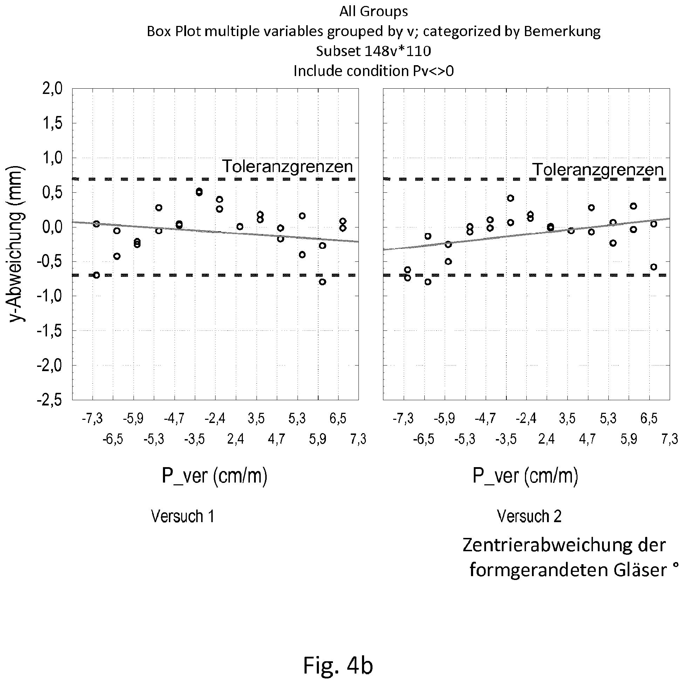

In Figur 4A sind Messergebnise in Bezug auf eine vertikale Zentrierabweichungen ohne der Positionsfehler und Figur 3B Bezug auf eine vertikale Zentrierabweichungen mit Berücksichtigung dargestellt. Dabei sind die Zentrierabweichungen für rohkantige fertige Brillengläser nach dem Formrandungsprozess in Abhängigkeit des Prismas im Haltepunkt dargestellt. Gläser, deren Zentrierabweichungen außerhalb der Toleranzgrenzen liegen, gelten aus Ausschuss. In Figur 4A wurden die Positionsfehler nicht berücksichtigt, wie zu Fig. 2a beschrieben. In Figur 4B wurden die Positionsfehler berücksichtigt, wie zu Fig. 2b beschrieben. Die Ausschussquote fällt mit Berücksichtigung der Positionsfehler deutlich niedriger aus (hier konkret insgesamt 2,7% für y-Abweichungen über beide Versuche).

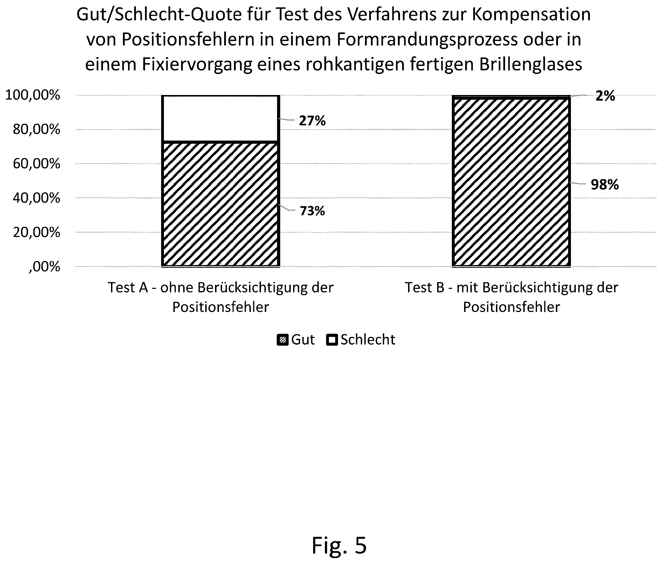

In Figur 5 sind exemplarisch die Gut/Schlecht-Quoten für zwei repräsentative Tests dargestellt. Für beide Tests wurden rohkantige fertige Brillengläser mit vergleichbaren Wirkungen formgerandet. Für Test A (Figur 5 linke Seite) wurden die Positionsfehler nicht berücksichtigt, wie zu Fig. 2a beschrieben. Es liegt eine hohe Ausschussquote (27 %) vor. Für Test B /Figur 5 rechte Seite) wurden die Positionsfehler berücksichtigt, wie in Fig. 2b beschrieben. Die Ausschussquote fällt deutlich niedriger aus (2 %).

## Patentansprüche

1. Verfahren zur Kompensation von Positionsfehlern in einem Formrandungsprozess eines rohkantigen fertigen Brillenglases, das Verfahren aufweisend:
- Ermitteln von Zentrierabweichungsparametern, wobei die Zentrierabweichungsparameter indikativ sind, für das Auftreten von Positionsfehlern des rohkantigen fertigen Brillenglases während eines Fixiervorganges und während eines nachfolgenden Formrandungsprozesses, und
- Verändern von Steuerinformationen unter Zuhilfenahme der ermittelten Zentrierabweichungsparameter derart, dass die Positionsfehler des rohkantigen fertigen Brillenglases kompensiert und/oder berücksichtigt werden,
**dadurch gekennzeichnet, dass**
- das Ermitteln der Zentrierabweichungsparameter das Berechnen eines Prismas im Haltepunkt umfasst.

2. Verfahren gemäß Anspruch 1, wobei das Auftreten von Positionsfehlern des rohkantigen fertigen Brillenglases durch den Fixiervorgang und/oder eines nachfolgenden Formrandungsprozesses bedingt ist.

3. Verfahren gemäß Anspruch 1 oder 2, wobei das Auftreten von Positionsfehlern des rohkantigen fertigen Brillenglases während des Fixiervorganges ein Verschieben und/oder Verdrehen während des Fixiervorganges und/oder während des nachfolgenden Formrandungsprozesses des rohkantigen fertigen Brillenglases aufweist.

4. Verfahren gemäß irgendeinem der vorhergehenden Ansprüche, wobei das Ermitteln von Zentrierabweichungsparametern ein Einlesen vorbestimmter Zentrierabweichungsparameter aufweist.

5. Verfahren gemäß irgendeinem der vorhergehenden Ansprüche, wobei die Änderung der Steuerinformationen ein örtliches Verändern eines vordefinierten Fixierpunktes am rohkantigen fertigen Brillenglas aufweist.

6. Verfahren gemäß irgendeinem der vorhergehenden Ansprüche, wobei die Änderung der Steuerinformationen ein örtliches Verändern eines vordefinierten Fixierpunktes am rohkantigen fertigen Brillenglas aufweist, derart, dass der vordefinierte Fixierpunkt derart verändert wird, dass das rohkantige fertige Brillenglas an einem alternativen Fixierpunkt fixiert wird, an dem das Auftreten von Positionsfehlern des rohkantigen fertigen Brillenglases während des Fixiervorganges und/oder des nachfolgenden Formrandungsprozesseses minimiert wird.

7. Verfahren gemäß irgendeinem der vorhergehenden Ansprüche, wobei die Änderung der Steuerinformationen ein Einlesen und/oder Bestimmen entsprechend modifizierter Zentrierdaten und/oder Formdaten für den nachfolgenden Formrandungsprozess aufweist.

8. Verfahren gemäß irgendeinem der vorhergehenden Ansprüche, wobei das Ermitteln von Zentrierabweichungsparametern basierend auf optischer Messung oder einer taktilen Bestimmung des Positionsfehlers des rohkantigen fertigen Brillenglases während des Fixiervorganges und/oder während des nachfolgenden Formrandungsprozesses erfolgt.

9. Verfahren gemäß irgendeinem der vorhergehenden Ansprüche, wobei das Ermitteln von Zentrierabweichungsparametern basierend auf der Bestimmung von Positionsfehlern mittels Positionsbestimmung mindestens einer Gravur auf dem rohkantigen fertigen Brillenglas während des Fixiervorganges und/oder während des nachfolgenden Formrandungsprozess erfolgt.

10. Verfahren gemäß irgendeinem der vorhergehenden Ansprüche, wobei die Änderung der Steuerinformationen eine zusätzliche Fixierung des rohkantigen fertigen Brillenglases derart bewirkt, dass das Auftreten von Positionsfehlern während des ursprünglichen Fixiervorganges und/oder des nachfolgenden Formrandungsprozesses minimiert oder gar verhindert wird.

11. Verfahren gemäß einem der vorangegangenen Ansprüche, wobei das rohkantig fertige Brillenglas während des Fixiervorgangs mit einem Chuck mechanisch fixiert wird.

12. Verfahren gemäß Anspruch 11, wobei das Berechnen eines Prismas im Haltepunkt dahingehend weitergebildet ist, dass hierbei die Ausdehnung des Chucks berücksichtigt wird und das Prisma über die Kontaktfläche des Chucks im Haltepunkt berechnet wird.

13. Vorrichtung zur Kompensation von Positionsfehlern eines rohkantigen fertigen Brillenglases, für einen Formrandungsprozess des rohkantigen fertigen Brillenglases, zur Durchführung eines Verfahrens gemäß einem der Ansprüche 1 bis 12, die Vorrichtung aufweisend:
- Ein Ermittlungsmittel, zum Ermitteln von Zentrierabweichungsparametern,
- Ein Steuermittel, zur Änderung der Steuerinformationen, basierend auf ermittelten Zentrierabweichungsparametern, wobei die Zentrierabweichungsparameter indikativ sind, für das Auftreten von Positionsfehlern des rohkantigen fertigen Brillenglases während eines Fixiervorganges und während eines nachfolgenden Formrandungsprozesses,
- Eine Steuereinheit, zur Übergabe der Steuerinformationen, auf deren Basis ein Fixiervorgang und ein nachfolgender Formrandungsprozess ausgeführt wird, derart, dass Positionsfehler des rohkantigen fertigen Brillenglases kompensiert beziehungsweise berücksichtigt werden,
- **dadurch gekennzeichnet, dass** die Vorrichtung weiterhin einen Chuck zur im Wesentlichen zentral Halterung des rohkantigen fertigen Brillenglases aufweist, und **dadurch gekennzeichnet, dass** das Ermittlungsmittel derart gestaltet ist, dass die Ermittlung der Zentrierabweichungsparameter auf einem Prisma im Haltepunkt basiert.

## Claims

1. A method of compensating for positioning errors in an edging process of a raw-edged finished spectacle lens, the method comprising:
- determining centering deviation parameters, the centering deviation parameters being indicative of the occurrence of positioning errors of the raw-edged finished spectacle lens during a fastening process and during a subsequent edging process, and
- changing control information with the aid of the determined centering deviation parameters in such a way that the positioning errors of the raw-edged finished spectacle lens are compensated for and/or taken into account,
**characterized in that**
- the determination of the centering deviation parameters comprises a calculation of a prism at the fastening point.

2. The method according to claim 1, wherein the occurrence of positioning errors of the raw-edged finished spectacle lens is caused by the fastening process and/or a subsequent edging process.

3. The method according to claim 1 or 2, wherein the occurrence of positioning errors of the raw-edged finished spectacle lens during the fastening process comprises shifting and/or twisting during the fastening process and/or during the subsequent edging process of the raw-edged finished spectacle lens.

4. The method according to any one of the preceding claims, wherein the determining of centering deviation parameters comprises reading of predetermined centering deviation parameters.

5. The method according to any one of the preceding claims, wherein the changing of the control information comprises a change in location of a predefined fastening point on the raw-edged finished spectacle lens.

6. The method according to any one of the preceding claims, wherein the change of the control information comprises a change in location of a predefined fastening point on the raw-edged finished spectacle lens such that the predefined fastening point is changed such that the raw-edged finished spectacle lens is fastened at an alternate fastening point at which the occurrence of positioning errors of the raw-edged finished spectacle lens during the fastening process and/or the subsequent edging process is minimized.

7. The method according to any one of the preceding claims, wherein the change of the control information comprises reading and/or determining correspondingly modified centering data and/or shape data for the subsequent edging process.

8. The method according to any one of the preceding claims, wherein the determination of centering deviation parameters is based on optical measurement or a tactile determination of the positioning error of the raw-edged finished spectacle lens during the fastening process and/or during the subsequent edging process.

9. The method according to any one of the preceding claims, wherein the determination of centering deviation parameters is based on the determination of positioning errors by means of positioning determination of at least one engraving on the raw-edged finished spectacle lens during the fastening process and/or during the subsequent edging process.

10. The method according to any one of the preceding claims, wherein the change of the control information encompasses an additional fastening of the raw-edged finished spectacle lens in such a way that the occurrence of positioning errors during the original fastening process and/or the subsequent edging process is minimized or even prevented.

11. The method according to any one of the preceding claims, wherein the raw-edged finished spectacle lens is mechanically fastened with a chuck during the fastening process.

12. The method according to claim 11, wherein the calculation of the prism in the fastening point is further configured in such a way that the extent of the chuck is taken into account and the prism is calculated via the contact surface of the chuck in the fastening point.

13. Apparatus for compensating positioning errors of a raw-edged finished spectacle lens, for an edging process of the raw-edged finished spectacle lens, for carrying out a method according to any one of claims 1 to 12, the apparatus comprising:
- a determination means, for determining centering deviation parameters
- a control means for changing the control information based on determined centering deviation parameters, wherein the centering deviation parameters are indicative of the occurrence of positioning errors of the raw-edged finished spectacle lens during a fastening process and/or during a subsequent edging process,
- a control unit for transferring the control information, on the basis of which a fastening process and/or a subsequent edging process is carried out, in such a way that positioning errors of the raw-edged finished spectacle lens are compensated for or taken into account,
- **characterized in that** the device further comprises a chuck for substantially centrally fastening the raw-edged finished spectacle lens, and **characterized in that** the determination means is designed in such a way that the determination of the centering deviation parameters is based on a prism in the fastening point.

## Revendications

1. Procédé de compensation d'erreurs de positionnement dans un processus de délignage d'un verre de lunettes fini à bords bruts, le procédé comprenant :
- détermination de paramètres d'écart de centrage, les paramètres d'écart de centrage étant indicatifs de l'apparition d'erreurs de positionnement du verre de lunettes fini à bords bruts pendant un processus de fixation et pendant un processus de délignage ultérieur, et
- modification des informations de commande à l'aide des paramètres d'écart de centrage déterminés de telle sorte que les erreurs de positionnement du verre de lunettes fini à bords bruts soient compensées et/ou prises en compte,
**caractérisé en ce que**
- la détermination des paramètres d'écart de centrage comprend le calcul d'un prisme au point de fixation.

2. Le procédé selon la revendication 1, dans lequel l'apparition d'erreurs de positionnement du verre de lunettes fini à bords bruts est conditionnée par le processus de fixation et/ou un processus de délignage ultérieur.

3. Le procédé selon la revendication 1 ou 2, dans lequel l'apparition d'erreurs de positionnement du verre de lunettes fini à bords bruts pendant le processus de fixation comprend un déplacement et/ou une torsion pendant le processus de fixation et/ou pendant le processus de délignage subséquent du verre de lunettes fini à bords bruts.

4. Le procédé selon l'une quelconque des revendications précédentes, dans lequel la détermination des paramètres d'écart de centrage comprend la lecture de paramètres d'écart de centrage prédéterminés.

5. Le procédé selon l'une quelconque des revendications précédentes, dans lequel la modification des informations de commande comprend une modification de location d'un point de fixation prédéfini sur le verre de lunettes fini à bords bruts.

6. Le procédé selon l'une quelconque des revendications précédentes, dans lequel la modification des informations de commande comprend une modification de location d'un point de fixation prédéfini sur le verre de lunettes fini à bord brut, de telle sorte que le point de fixation prédéfini est modifié de telle sorte que le verre de lunettes fini à bord brut est fixé à un point de fixation alternatif auquel l'apparition d'erreurs de positionnement du verre de lunettes fini à bord brut est minimisée pendant le processus de fixation et/ou le processus de délignage suivant.

7. Le procédé selon l'une quelconque des revendications précédentes, dans lequel la modification des informations de commande comprend la lecture et/ou la détermination de données de centrage et/ou de données de forme modifiées de manière appropriée pour le processus de délignage suivant.

8. Le procédé selon l'une quelconque des revendications précédentes, dans lequel la détermination des paramètres d'écart de centrage est basée sur une mesure optique ou une détermination tactile de l'erreur de positionnement du verre de lunettes fini à bord brut pendant le processus de fixation et/ou pendant le processus de délignage suivant.

9. Le procédé selon l'une quelconque des revendications précédentes, dans lequel la détermination des paramètres d'écart de centrage est basée sur la détermination des erreurs de positionnement au moyen de la détermination de la position d'au moins une gravure sur le verre de lunettes fini à bord brut pendant le processus de fixation et/ou pendant le processus de délignage suivant.

10. Le procédé selon l'une quelconque des revendications précédentes, dans lequel la modification des informations de commande comprend une fixation supplémentaire du verre de lunettes fini à bords bruts de telle sorte que l'apparition d'erreurs de positionnement pendant le processus de fixation initial et/ou le processus de délignage suivant est minimisée, ou même empêchée.

11. Le procédé selon l'une quelconque des revendications précédentes, dans lequel le verre de lunettes fini à bords bruts est fixé mécaniquement au moyen d'un mandrin pendant le processus de fixation.

12. Le procédé selon la revendication 11, dans lequel le calcul du prisme au point de fixation est perfectionné en ce qu'il tient compte de l'étendue du mandrin et que le prisme est calculé sur la surface de contact du mandrin au point de fixation.

13. Dispositif de compensation d'erreurs de positionnement d'un verre de lunettes fini à bords bruts, pour un processus de délignage du verre de lunettes fini à bords bruts, pour la mise en œuvre d'un procédé selon l'une des revendications 1 à 12, le dispositif comprenant :
- un moyen de détermination, pour déterminer des paramètres d'écart de centrage,
- un moyen de commande pour modifier les informations de commande sur la base des paramètres d'écart de centrage déterminés, les paramètres d'écart de centrage étant indicatifs de l'apparition d'erreurs de positionnement du verre de lunettes fini à bords bruts pendant un processus de fixation et/ou pendant un processus de délignage suivant,
- une unité de commande pour transmettre les informations de commande sur la base desquelles un processus de fixation et/ou un processus de délignage suivant est exécuté, de telle sorte que les erreurs de positionnement du verre de lunettes fini à bords bruts sont compensées ou prises en compte,
- **caractérisé en ce que** le dispositif comprend en outre un mandrin pour la fixation essentiellement central du verre de lunettes fini à bords bruts, et **caractérisé en ce que** le moyen de détermination est conçu de telle sorte que la détermination des paramètres d'écart de centrage est basée sur un prisme au point de fixation.
